# EUROPEAN PATENT SPECIFICATION

(11) **EP 4 159 480 B1**
(45) Date of publication and mention of the grant of the patent: **16.04.2025**
(21) Application number: 21812215.8
(22) Date of filing: 08.01.2021
(51) Int. Cl.: B60C 9/00, B60C 15/06

(54) **PNEUMATIC TIRE**
LUFTREIFEN
PNEUMATIQUE

(30) Priority: 27.05.2020 JP 2020092586
(43) Date of publication of application: 05.04.2023
(73) Proprietor: BRIDGESTONE CORPORATION, Chuo-ku Tokyo 104-8340 (JP)
(72) Inventor: MIYAZONO, Toshiya, Tokyo 104-8340 (JP)
(74) Representative: Marks & Clerk LLP
(86) International application number: PCT/JP2021/000566
(87) International publication number: WO 2021/240863

(56) References cited:
- WO-A1-2011/142389
- JP-A- 2006 347 394
- JP-A- 2006 347 394
- JP-A- 2012 106 531
- JP-A- 2012 245 655
- JP-A- 2012 245 655
- JP-A- 2016 049 920
- JP-A- 2016 074 359
- JP-A- 2016 165 923
- JP-A- 2016 165 923
- JP-A- 2019 018 762
- JP-A- 2019 018 762
- JP-A- H1 076 818

## Description

### TECHNICAL FIELD

The present invention relates to a pneumatic tire.

### BACKGROUND

Conventionally, a pneumatic tire provided with a carcass ply extending between a pair of bead cores is known. The carcass ply has a turn-up portion that is formed by turning the carcass ply up around the bead core from the inside to the outside in the tire width direction. Patent Literature (PTL) 1 and 2 disclose a pneumatic tire having a reinforcement layer, made of organic fibers, arranged outward in the tire width direction from the turn-up portion of the carcass ply.

WO2011142389A1 discloses a pneumatic tire which can be manufactured inexpensively and easily, and which achieves a desired reinforcement effect, without increasing the weight of the tire or reducing the performance thereof, by using reinforcing members capable of utilizing material remnants that used to be discarded in the past. The pneumatic tire comprises a pair of bead sections, a pair of sidewall sections which continue to the bead sections, and a tread section which straddles the two sidewall sections. Moreover, the pneumatic tire is provided with a carcass that consists of one or more layers and reinforces these sections in an area extending between a pair of bead cores each of which is buried inside one of the bead sections. The pneumatic tire is also provided with reinforcing layers each of which consists of reinforcing fibers that are plated or adhesive-treated, and a rubber sheet that covers the reinforcing fibers. At least one end of each reinforcing fiber terminates inside each of the reinforcing layers. Furthermore, in a projection formed by projecting the reinforcing fibers in a direction perpendicular to either of the reinforcing layers, reinforcing members intersect one another at least in a portion of the projection.

JPH1076818A discloses a reinforcing rubber layer consisting of rubber compound in which 2-50 part by wt. radially stretching short fibers are included relative to 100 parts by wt. rubber component, is installed between the outer side face of a carcass and the external wall surface of the tire side part extending from each end of the tread part to the bead part via the side wall part where carcass turned up and a belt layer are furnished, and is equipped with a first reinforcing rubber layer in which short fibers are aligned and a second reinforcing rubber layer in which the direction of short fibers is different from the first with the intersecting angle over 10deg., wherein the first and second reinforcing rubber layers have an overlapping part in the tire axial direction.

JP2006347394A discloses a bead reinforcement rubber layer extending to the outer side in a tire radial direction from a bead core while located adjacent to an outer side surface in a tire axial direction of a carcass and comprising a short fiber compound rubber containing a short fiber is arranged on a bead part. The short fiber is oriented in the tire radial direction. Radial height of an outer end in the tire radial direction of the bead reinforcement rubber layer is 1.5 times or higher the flange height of the rim and is made smaller than radial height of the tire maximum width position.

JP2016049920 discloses a tire that has an RF tag or a built-in RF tag structure configured in such a manner that the RF tag is covered by a coating rubber. The RF tag or the RF tag structure is arranged in contact with a tire inner cavity side of a code reinforcement layer so as not to come into contact with a stiffener which reinforces a bead part on the side of the bead part from the tire maximum width position, and a reinforcement layer is arranged formed by a code layer or a rubber layer on the tire inner cavity side of the RF tag or the RF tag structure arranged in contact with the tire inner cavity side of the code reinforcement layer.

JP2012106531 discloses a bead that includes: an inner piece along an inner side of a carcass ply body; a U-shape first bead reinforcement cord ply in which an outer piece along an outer side of a carcass ply fold-back, and a bottom piece are connected; a second bead reinforcement cord ply extending over the inner piece to the outside in a radius direction along the body from the inner end between the inner piece and the body; and a fretting preventing rubber layer. A thickness of a fretting preventing rubber layer is 0.5-1.5 mm, and a complex modulus is 6.0-10.0 MPa. A difference between an outer end height of the second bead reinforcement cord ply and a height of the fold-back section is 5 to 25 mm. A difference between an outer end height of the inner piece and an inner end height of the second bead reinforcement cord ply is 10 to 40 mm.

### CITATION LIST

### Patent Literature

PTL 1: JP 2012-46155 A
PTL 2: JP 2015-63172 A

### SUMMARY

### (Technical Problem)

During compression deformation of the pneumatic tire, such as when traveling on a road surface, the tire widthwise outer surface of the bead portion of the pneumatic tire is pressed by the rim flange of the rim to which it is assembled. As a result, the cover rubber on the outer side of the bead portion in the tire width direction is sandwiched between the turn-up portion of the carcass ply and the rim flange portion of the rim to be compressed and deformed, so that a portion thereof moves along the turn-up portion of the carcass ply. Therefore, shear strain along the turn-up portion is concentrated in the cover rubber near the turn-up portion. Provision of the reinforcement layer described in PTL 1 and 2 can suppress the concentration of shear strain along the turn-up portion in the cover rubber near the turn-up portion of the carcass ply. However, even when a reinforcement layer such as the one described in PTL 1 and 2 is provided, if the adhesiveness between the reinforcement layer itself and the surrounding cover rubber is weak, shear strain along the reinforcement layer may concentrate in the cover rubber near the reinforcement layer, which may in turn result in failure.

It is an aim of the present invention to provide a pneumatic tire capable of suppressing the concentration of shear strain along the reinforcement layer in the cover rubber near the reinforcement layer.

### (Solution to Problem)

According to a first aspect of the invention there is provided a pneumatic tire as specified in claim 1.

### (Advantageous Effect)

According to the present invention, a pneumatic tire capable of suppressing the concentration of shear strain along the reinforcement layer in the cover rubber near the reinforcement layer can be provided.

### BRIEF DESCRIPTION OF THE DRAWINGS

In the accompanying drawings:
FIG. 1 is a tire widthwise cross-sectional view of a pneumatic tire as an embodiment of the present invention;
FIG. 2 is a tire widthwise cross-sectional view illustrating an enlargement of the area near a bead portion in the pneumatic tire illustrated in FIG. 1, which is mounted on an applicable rim and compressed and deformed in the tire radial direction;
FIG. 3A is a cross-sectional view of metal fibers forming a reinforcement layer of the pneumatic tire illustrated in FIG. 1;
FIG. 3B is a cross-sectional view of a variation of the metal fibers illustrated in FIG. 3A; and
FIG. 4 is a diagram illustrating a variation of the reinforcement layer illustrated in FIG. 1.

### DETAILED DESCRIPTION

Embodiments of a pneumatic tire according to the present invention are described below with reference to the drawings. Configurations that are common across drawings are labeled with the same reference signs.

Hereafter, unless otherwise specified, the dimensions, length relationships, positional relationships, and the like of each element are assumed to be measured in a reference state in which the pneumatic tire is mounted on an applicable rim, filled to a prescribed internal pressure, and under no load.

The "applicable rim" refers to a standard rim designated in the following standards in accordance with tire size ("Design Rim" in the YEAR BOOK of the Tire and Rim Association, Inc. (TRA), and "Measuring Rim" in the STANDARDS MANUAL of the European Tyre and Rim Technological Organisation (ETRTO)). The standards are determined according to an effective industrial standard in areas where the tire is produced or used. Examples of the standards include the YEAR BOOK of the TRA in the USA, the STANDARDS MANUAL of the ETRTO in Europe, and the JATMA YEAR BOOK of the Japan Automobile Tyre Manufacturers Association (JATMA) in Japan.

The "applicable rim" includes sizes that could be included in the future in the aforementioned industrial standards, in addition to current sizes. Examples of the sizes that could be described in the future in the aforementioned industrial standards include the sizes described under FUTURE DEVELOPMENTS in the ETRTO 2013 edition. In the case of a size not listed in the aforementioned industrial standards, the "applicable rim" refers to a rim whose width corresponds to the bead width of the pneumatic tire.

The "prescribed internal pressure" refers to the air pressure (maximum air pressure) corresponding to the maximum load capability of a single wheel for the applicable size/ply rating in the aforementioned JATMA YEAR BOOK or the like. In the case of a size not described in the aforementioned industrial standards, the "prescribed internal pressure" refers to the air pressure (maximum air pressure) corresponding to the maximum load capability prescribed for each vehicle on which the tire is mounted. The "maximum load" described below refers to the tire maximum load capability specified in the aforementioned standards, such as JATMA, for tires of the applicable size, or in the case of sizes not specified in the aforementioned industrial standards, the "maximum load" refers to the load corresponding to the maximum load capability specified for each vehicle on which the tire is mounted.

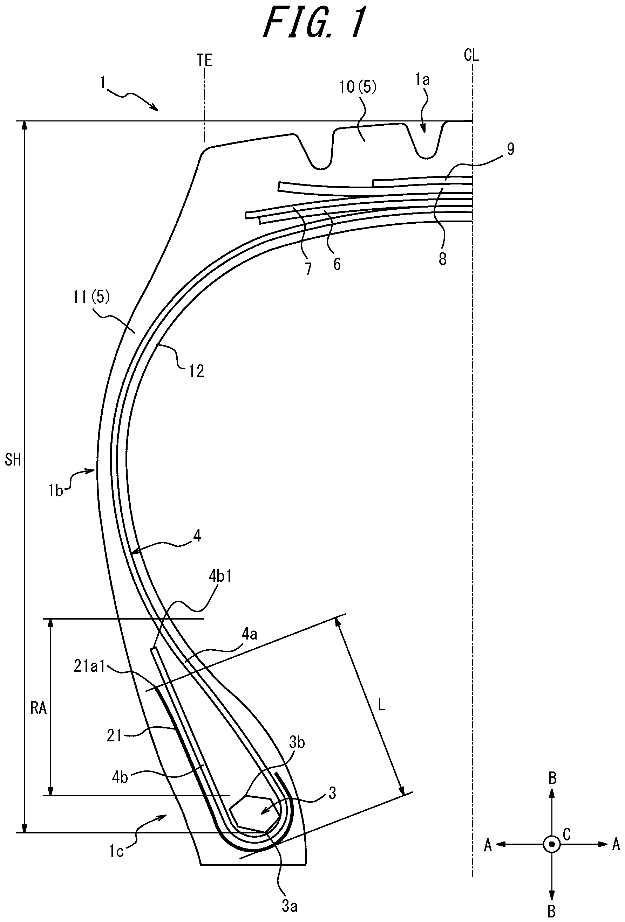

FIG. 1 illustrates a pneumatic tire 1 (hereinafter simply referred to as "tire 1") according to the present invention. Specifically, FIG. 1 is a cross-sectional view of the tire 1, in a cross-section parallel to the tire width direction A and including the tire center axis, in the reference state in which the tire 1 is mounted on an applicable rim, filled to the prescribed internal pressure, and under no load. Hereafter, this cross-section is referred to as the "tire widthwise cross-section". Since the tire 1 has a symmetrical configuration with respect to the tire equatorial plane CL, FIG. 1 illustrates a tire widthwise cross-section on only one side of tire equatorial plane CL in the tire width direction A. However, the tire may have an asymmetrical configuration with respect to the tire equatorial plane CL.

### <Applicable Rim 2>

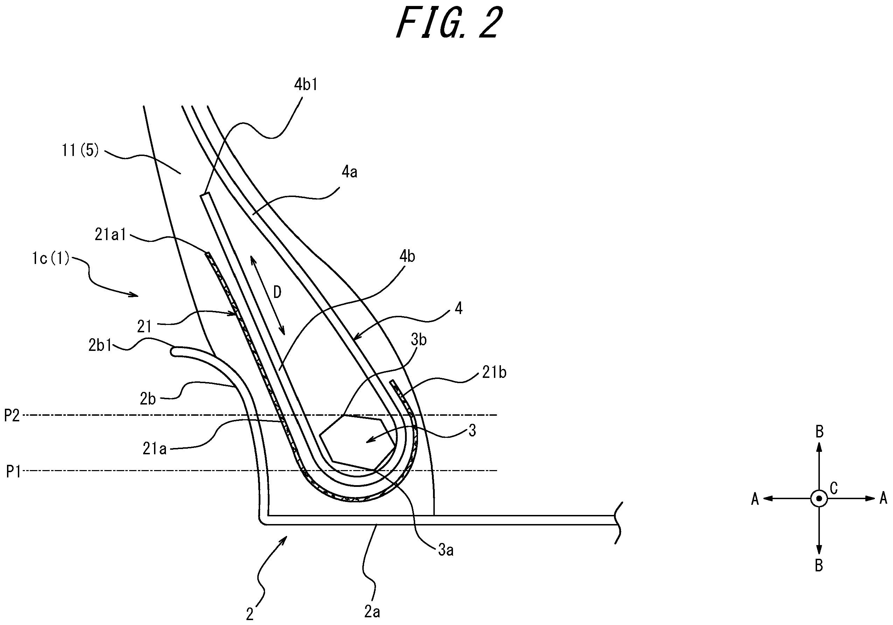

FIG. 2 is a tire widthwise cross-sectional view illustrating an enlargement of the area near a bead portion 1c in the tire 1 illustrated in FIG. 1 when the tire 1 is mounted on an applicable rim 2. FIG. 2 illustrates the tire 1 as compressed and deformed in the tire radial direction, for example when traveling on a road surface. The applicable rim 2 of the present embodiment illustrated in FIG. 2 includes a rim seat portion 2a, to which the bead core 3, described below, of the tire 1 is attached on the outside in a tire radial direction B, and a rim flange portion 2b protruding outward in the tire radial direction B from both ends of the rim seat portion 2a in the tire width direction A. As illustrated in FIG. 2, when the tire 1 is compressed and deformed in the tire radial direction B, the bead portion 1c of the tire 1 is pressed inward in the tire width direction A by the rim flange portion 2b.

### <Tire 1>

As illustrated in FIG. 1, the tire 1 includes a tread portion 1a, a pair of sidewall portions 1b extending from both ends of the tread portion 1a in the tire width direction A inward in the tire radial direction B, and a pair of bead portions 1c provided at the inner ends of the sidewall portions 1b in the tire radial direction B. The tire 1 is a radial tire and has a configuration suitable for use as a pneumatic tire for trucks, buses, and other heavy load vehicles. Herein, the "tread portion 1a" refers to the portion sandwiched by tread ends TE on both sides in the tire width direction A. The "bead portion 1c" refers to the portion in the tire radial direction B near where the below-described bead core 3 is located. The "sidewall portion 1b" refers to the portion between the tread portion 1a and the bead portion 1c. The "tread edge TE" refers to the outermost position of the contact patch in the tire width direction when the tire is mounted on the above-described applicable rim, filled to the above-described prescribed internal pressure, and placed under the maximum load.

Furthermore, the outer surface of the tire includes the outer surface of the tread portion 1a, which is the surface on the outer side of the tread portion 1a in the tire radial direction B, the outer surface of the sidewall portion 1b, which is the surface on the outer side of the sidewall portion 1b in the tire width direction A, and the outer surface of the bead portion 1c, which is the surface on the outer side of the bead portion 1c in the tire width direction A. The tire outer surface is configured by a cover rubber 5 formed by tread rubber 10 and side rubber 11.

The tire 1 includes the bead cores 3, a carcass ply 4, four layers of belt plies 6 to 9, tread rubber 10 and side rubber 11 as cover rubber 5, an inner liner 12, and a reinforcement layer 21.

### [Bead Core 3]

The bead core 3 is embedded in the bead portion 1c. The tire 1 may be further provided with a rubber bead filler located outward from the bead core 3 in the tire radial direction B. The bead core 3 includes a plurality of bead cords that are coated by rubber. The bead cords are formed by steel cords. The steel cords can, for example, be made of steel monofilaments or twisted wires.

### [Carcass Ply 4]

The carcass ply 4 extends toroidally to straddle the pair of bead portions 1c, more specifically to straddle the pair of bead cores 3. The carcass ply 4 of the present embodiment has a radial structure.

Specifically, the carcass ply 4 extends toroidally across the pair of bead cores 3 and is folded from inside to outside in the tire width direction A around each bead core 3. The carcass ply 4 includes a plurality of ply cords arranged in parallel to each other and coating rubber that covers the plurality of ply cords. Instead of including the coating rubber, however, the carcass ply 4 may be configured by, for example, arranging a plurality of ply cords that are made of brass, or plated with a material including brass, in parallel and bonding adjacent ply cords. The tire 1 in the present embodiment includes one carcass ply 4 but may instead include two or more carcass plies 4. The plurality of ply cords of the carcass ply 4 are arranged at an angle of, for example, 75° to 90° with respect to the tire circumferential direction C. The ply cords of the carcass ply 4 can be metal cords, such as steel cords. The steel cords can be made of steel monofilaments or twisted wires with, for example, a brass coating on the surface. The ply cords may also be organic fiber cords, for example, with a brass coating on the surface.

More specifically, the carcass ply 4 has a main body 4a located between the pair of bead cores 3 and a turn-up portion 4b that is formed by being connected to the main body 4a and turned up from inside to outside in the tire width direction A around each bead core 3. As described above, the tire 1 may further include a bead filler extending while tapering toward the outer side of the bead core 3 in the tire radial direction B. In a case in which the tire 1 includes a bead filler, the bead filler is arranged between the main body 4a and the turn-up portion 4b of the carcass ply 4.

### [Belt Plies 6 to 9]

The belt plies 6 to 9 are disposed in the tread portion 1a. Specifically, the belt plies 6 to 9 are disposed outside of the carcass ply 4 in the tire radial direction B relative to the crown of the carcass ply 4. The tire 1 in the present embodiment includes four layers of belt plies 6 to 9, but the number of layers is not particularly limited as long as at least one layer is provided. Each belt ply 6 to 9 includes a plurality of ply cords arranged in parallel to each other and coating rubber that covers the plurality of ply cords. Instead of including the coating rubber, however, each belt ply 6 to 9 may be configured by, for example, arranging a plurality of ply cords that are made of brass, or plated with a material including brass, in parallel and bonding adjacent ply cords. Each belt ply 6 to 9 forms a sloped belt layer in which the cord cut edges of the ply cords are exposed at both ends in the tire width direction A. The plurality of ply cords in each belt ply 6 to 9 extends at an angle with respect to the tire width direction A and the tire circumferential direction C. For example, the ply cords are arranged to be inclined at an angle of 10° to 60° with respect to the tire circumferential direction C. The ply cords in each belt ply 6 to 9 can be metal cords, such as steel cords. The steel cords can be made of steel monofilaments or twisted wires with, for example, a brass coating on the surface. The ply cords may also be organic fiber cords, for example, with a brass coating on the surface.

One or more of the four layers of belt plies 6 to 9 may be a circumferential belt layer that includes a plurality of ply cords extending along the tire circumferential direction C.

### [Tread Rubber 10 and Side Rubber 11]

The tread rubber 10 covers the crown portion of the main body 4a of the carcass ply 4 and covers the outer side, in the tire radial direction B, of the four layers of belt plies 6 to 9. The outer surface of the tread portion 1a in the present embodiment is configured by the tread rubber 10. A tread pattern including circumferential grooves extending in the tire circumferential direction C, widthwise grooves extending in the tire width direction A, and the like is formed on the outer surface of the tread portion 1a.

The side rubber 11 covers the outside, in the tire width direction A, of the main body 4a and the turn-up portion 4b of the carcass ply 4. The outer surface of the sidewall portion 1b and the outer surface of the bead portion 1c in the present embodiment are configured by the side rubber 11. The outer end of the side rubber 11 in the tire radial direction B is connected to the end of the above-described tread rubber 10 in the tire width direction A.

In this way, the tread rubber 10 and side rubber 11 in the present embodiment as a whole form the cover rubber 5 of the tire 1, which covers the carcass ply 4 and the belt plies 6 to 9 and configures the tire outer surface.

### [Inner Liner 12]

The inner liner 12 covers the tire inner surface side of the main body 4a of the carcass ply 4 and configures the tire inner surface of the tire 1. The inner liner 12 is layered onto the tire inner surface side of the main body 4a of the carcass ply 4. The inner liner 12 may, for example, be formed from a butyl-based rubber having low air permeability. Butyl-based rubber refers to butyl rubber and butyl halide rubber, which is a derivative thereof.

### [Belt Reinforcement Layer 21]

As illustrated in FIGS. 1 and 2, the reinforcement layer 21 is located inward from the tire outer surface of the side rubber 11 of the cover rubber 5 and covers an outer side, in the tire width direction A, of at least a portion of the turn-up portion 4b of the carcass ply 4. Therefore, as illustrated in FIG. 2, even if the bead portion 1c of the tire 1 is pressed by the rim flange portion 2b, and the cover rubber 5 between the rim flange portion 2b and the turn-up portion 4b of the carcass ply 4 is compressed and deformed, the concentration of shear strain along the turn-up portion 4b in the cover rubber 5 near the turn-up portion 4b can be suppressed. As illustrated in FIG. 2, the reinforcement layer 21 is configured by a non-woven fabric formed from metal fibers 22. The modulus of the reinforcement layer 21 in the cord extension direction D of the ply cords of the turn-up portion 4b in the carcass ply 4 is lower than the modulus of the turn-up portion 4b in the cord extension direction D. As compared to the case in which the reinforcement layer consists of organic fibers, the use of such a reinforcement layer 21 can maintain flexibility while improving the adhesiveness with the side rubber 11 as the surrounding cover rubber 5. Therefore, the concentration of shear strain along the reinforcement layer 21 can also be suppressed for the cover rubber 5 near the reinforcement layer 21.

As illustrated in FIG. 1, in the tire widthwise cross-sectional view, at least a portion of the reinforcement layer 21 is located in a region RA, in the tire radial direction B, that is from 5% to 30% of the tire section height SH from an inner edge 3a of the bead core 3 in the tire radial direction B outward in the tire radial direction B. The tire section height SH is the length in the tire radial direction B, in the tire widthwise cross-section, from the inner edge 3a of the bead core 3 in the tire radial direction B to the outer edge of the tread rubber 10 in the tire radial direction B (in the present embodiment, the position of the tire equatorial plane CL in the tire width direction A). In this way, when the bead portion 1c is pressed against the rim flange portion 2b of the applicable rim 2, and the cover rubber 5 on the outer side of the bead portion 1c in the tire width direction A is sandwiched between the rim flange portion 2b and the turn-up portion 4b of the carcass ply 4 to be compressed and deformed, at least a portion of the above-described reinforcement layer 21 also tends to be sandwiched between the rim flange portion 2b and the turn-up portion 4b of the carcass ply 4. In other words, in the tire widthwise cross-sectional view (see FIGS. 1 and 2), the entire reinforcement layer 21 is prevented from moving together with the cover rubber 5 along the cord extension direction D of the ply cords of the turn-up portion 4b. Consequently, the concentration of shear strain along the reinforcement layer 21 can be better suppressed at the cover rubber 5 near the reinforcement layer 21.

As illustrated in FIG. 2, when the tire 1 is mounted on the applicable rim 2, at least a portion of the reinforcement layer 21 is preferably located farther inward in the tire radial direction B than the position of the outer edge 2b1 of the rim flange portion 2b in the tire radial direction B. Thus, in the same way as above, when the bead portion 1c is pressed against the rim flange portion 2b of the applicable rim 2, and the cover rubber 5 on the outer side of the bead portion 1c in the tire width direction A is sandwiched between the rim flange portion 2b and the turn-up portion 4b of the carcass ply 4 to be compressed and deformed, at least a portion of the above-described reinforcement layer 21 also tends to be sandwiched between the rim flange portion 2b and the turn-up portion 4b of the carcass ply 4. Consequently, the concentration of shear strain along the reinforcement layer 21 can be better suppressed at the cover rubber 5 near the reinforcement layer 21.

As illustrated in FIG. 2, in the tire widthwise cross-sectional view, the reinforcement layer 21 preferably extends from a position farther outward, in the tire radial direction B, than the outer edge 3b of the bead core 3 in the tire radial direction B to a position farther inward on the outer side, in the tire width direction A, of the turn-up portion 4b. In other words, in the reinforcement layer 21, the reinforcement main body 21a that is located farther outward in the tire width direction A than the turn-up portion 4b of the carcass ply 4 preferably extends in the tire radial direction B across a position P2, in the tire radial direction B, of the outer edge 3b of the bead core 3. In this way, when the bead portion 1c is pressed against the rim flange portion 2b of the applicable rim 2, and the cover rubber 5 on the outer side of the bead portion 1c in the tire width direction A is sandwiched between the rim flange portion 2b and the turn-up portion 4b of the carcass ply 4 to be compressed and deformed, at least a portion of the reinforcement main body 21a of the reinforcement layer 21 also tends to be sandwiched between the rim flange portion 2b and the turn-up portion 4b of the carcass ply 4. Consequently, the concentration of shear strain along the reinforcement layer 21 can be better suppressed at the cover rubber 5 near the reinforcement layer 21.

Furthermore, as illustrated in FIG. 2, in the tire widthwise cross-sectional view, the reinforcement layer 21 is turned up around the bead core 3 from the outer side towards the inner side in the tire width direction A. In other words, in the reinforcement layer 21, the portion of the reinforcement main body 21a in the tire radial direction B located father outward in the tire width direction A than the turn-up portion 4b of the carcass ply 4 is preferably wrapped around the bead core 3 and is preferably wrapped up farther outward, in the tire radial direction B, than a position P1, in the tire radial direction B, of the inner edge 3a of the bead core 3. In this way, when the bead portion 1c is pressed against the rim flange portion 2b of the applicable rim 2, and the cover rubber 5 on the outer side of the bead portion 1c in the tire width direction A is sandwiched between the rim flange portion 2b and the turn-up portion 4b of the carcass ply 4 to be compressed and deformed, the reinforcement layer 21 can be further prevented from moving together with the cover rubber 5 along the cord extension direction D of the ply cords of the turn-up portion 4b. Consequently, the concentration of shear strain along the reinforcement layer 21 can be better suppressed at the cover rubber 5 near the reinforcement layer 21.

Furthermore, in the reinforcement layer 21, the reinforcement main body 21a formed by being turned up around the bead core 3 from the outer side towards the inner side in the tire width direction A is more preferably wrapped up farther outward, in the tire radial direction B, than the outer edge 3b of the bead core 3 in the tire widthwise cross-sectional view (see FIG. 2). In this way, the reinforcement layer 21 is even further prevented from moving together with the cover rubber 5 along the cord extension direction D of the ply cords of the turn-up portion 4b. Therefore, the concentration of shear strain along the reinforcement layer 21 can be even further suppressed at the cover rubber 5 near the reinforcement layer 21.

The reinforcement layer 21 configured by a non-woven fabric formed from metal fibers 22 can be manufactured by various methods, and the manufacturing method is not limited. For example, a needle punch can be used to entangle metal fibers 22, obtained by various cutting methods, into a felt-like shape. The diameter of the metal fibers 22 can be changed by changing the amount of cutting, for example. The thickness and density of the non-woven fabric formed from the metal fibers 22 can be changed by, for example, changing the amount of metal fibers 22 that are punched and changing the number of vertical movements per unit time during needle punching.

The reinforcement layer 21 in the present embodiment is configured by a non-woven fabric formed from metal fibers 22. By the reinforcement layer 21 being a non-woven fabric, the edges of the metal fibers 22 tend not to be exposed on the outer surface of the reinforcement layer 21, and the occurrence of cracks in the surrounding rubber can be suppressed.

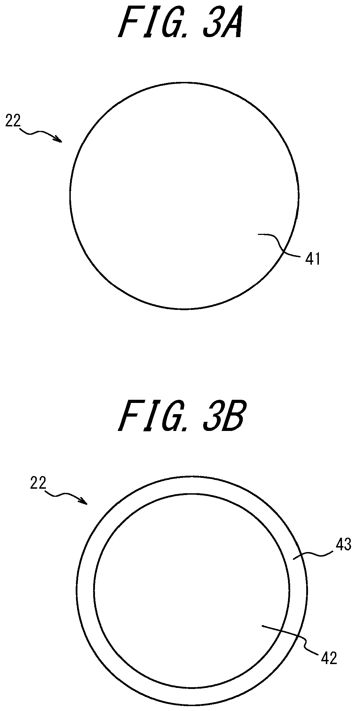

FIG. 3A is a cross-sectional view of the metal fiber 22 configuring the reinforcement layer 21. The metal fiber 22 is configured by steel, copper, aluminum, nickel, or an alloy including any of these. In other words, the metal fiber 22 illustrated in FIG. 3A is formed from a wire 41 composed of the above-described metal materials. In particular, the metal fibers 22 configuring the reinforcement layer 21 are preferably formed from brass. In this way, the adhesiveness to the surrounding cover rubber 5 is enhanced as compared not only to organic fibers but also to metal fibers formed from the other metal materials described above, and the concentration of sheer stress at the cover rubber 5 near the reinforcement layer 21 can be further suppressed. However, instead of the metal fiber 22 itself being formed from brass, the surface of the metal fiber 22 can be configured as a coating film 33 formed from a binary alloy of copper and zinc, or a ternary alloy of copper, zinc, and cobalt, as illustrated in FIG. 3B. The metal fiber 22 illustrated in FIG. 3B is configured by a wire 42 as the base material and a coating film 43 laminated on the surface of the wire 42. The method of forming such a film 43 is not particularly limited but may, for example, be electrolytic treatment by binary alloy plating or ternary alloy plating, or a method of alloying by heat treatment after penetrating in copper plating and zinc plating baths to perform laminated plating treatment.

The density of the non-woven fabric configuring the reinforcement layer 21 is preferably 100 g/m² to 900 g/m² and in particular is preferably 200 g/m² to 600 g/m². When the density of the non-woven fabric configuring the reinforcement layer 21 is in the above range, the concentration of sheer stress at the cover rubber 5 near the reinforcement layer 21 can be further suppressed. Consequently, the durability of the tire 1 can be further improved. Furthermore, when the density of the non-woven fabric configuring the reinforcement layer 21 is in the above range, an excessive increase in the weight of the tire 1 due to the reinforcement layer 21 can also be suppressed. The density of the non-woven fabric configuring the reinforcement layer 21 refers to the mass per unit area as measured in accordance with ISO 9073-1. Specifically, the density of the non-woven fabric configuring the reinforcement layer 21 can be calculated by removing the non-woven fabric from the tire 1, melting or incinerating the rubber to remove the rubber, and then weighing the non-woven fabric itself and calculating the density.

Furthermore, the diameter of the filament configuring the reinforcement layer 21 is preferably 10 µm to 75 µm and in particular is preferably 20 µm to 50 µm. In a case in which the cross-section is rectangular, the area may be replaced by the circular area. In this way, the durability of the tire 1 can be further enhanced, and an excessive increase in weight of the tire 1 can be also suppressed, for the same reasons as for the above-described density of the non-woven fabric.

As illustrated in FIG. 1, in the tire widthwise cross-sectional view, the reinforcement layer 21 and the ply preferably overlap by 10 mm or more in a ply extension direction orthogonal to the ply thickness direction. Specifically, as illustrated in FIG. 1, the reinforcement layer 21 and the turn-up portion 4b of the carcass ply 4 in the present embodiment have an overlap region L of 10 mm or more in the carcass ply extension direction (the same direction as the cord extension direction D of the ply cords of the turn-up portion 4b) that is orthogonal to the carcass ply thickness direction. The overlap region L is more preferably 20 mm to 60 mm. By the overlap region L being 10 mm or more, the durability of the tire 1 can be further enhanced, and an excessive increase in weight of the tire 1 can be also suppressed, for the same reasons as for the above-described density of the non-woven fabric.

In the tire widthwise cross-sectional view (see FIGS. 1 and 2), the extending length of the reinforcement layer 21 along the turn-up portion 4b of the carcass ply 4 is preferably 10 mm or more, more preferably 20 mm or more, and in particular preferably 30 mm or more. In this way, when the tire 1 is compressed and deformed in the tire radial direction B, the reinforcement layer 21 is more easily sandwiched between the rim flange portion 2b and the turn-up portion 4b of the carcass ply 4. From the viewpoint of suppressing an excessive increase in weight, the extending length of the reinforcement layer 21 along the turn-up portion 4b of the carcass ply 4 is preferably 80 mm or less.

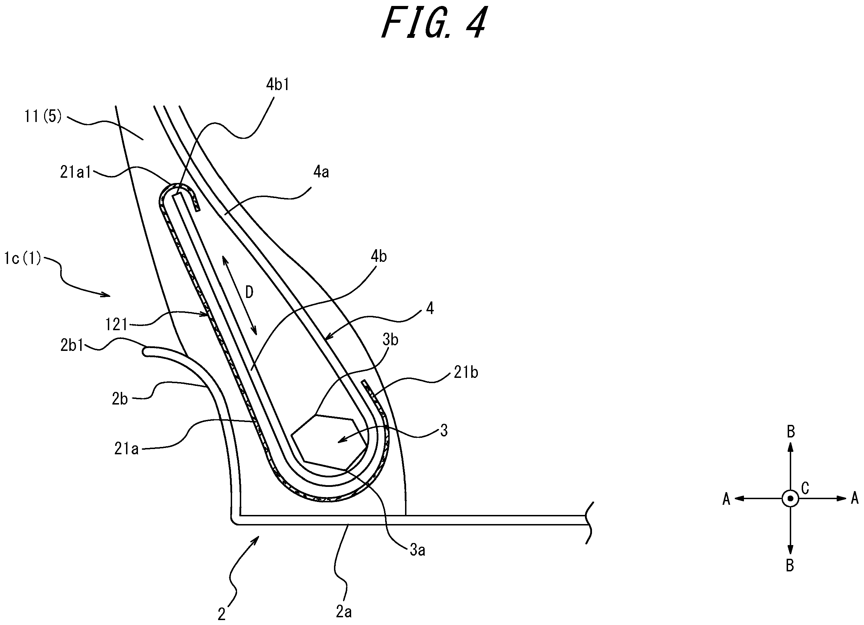

As illustrated in FIGS. 1 and 2, the outer edge 21a1, in the tire radial direction B, of the reinforcement layer 21 of the present embodiment is located father inward in the tire radial direction B than the outer edge 4b1 of the turn-up portion 4b in the tire radial direction B, but this configuration is not limiting. FIG. 4 illustrates a reinforcement layer 121 as a variation of the reinforcement layer 21. As illustrated in FIG. 4, the outer edge 21a1 of the reinforcement layer 121 in the tire radial direction B may be located father outward in the tire radial direction B than the outer edge 4b1 of the turn-up portion 4b in the tire radial direction B. In this way, the reinforcement layer 121 covers the outer edge 4b1 of the turn-up portion 4b from the outer side in the tire width direction A, thereby relieving the stress concentration due to the difference in rigidity from the surrounding cover rubber 5 at the position of the outer edge 4b1 of the turn-up portion 4b. The reinforcement layer 121 illustrated in FIG. 4 not only covers the outer edge 4b1 of the turn-up portion 4b from the outer side in the tire width direction A but is also turned up in a U-shape so as to cover the outer edge 4b1 from both the outer side in the tire radial direction B and the inner side in the tire width direction A. However, this configuration is not limiting.

### <Verification Test Using Test Pieces>

Next, an overview, along with the results, of a verification test conducted to verify the above-described effects of the reinforcement layer 21 are described. In this verification test, three test pieces in which a plurality of steel fibers were embedded in rubber were subjected to a load by repeatedly pressing cylindrical protrusions, with a tip radius of 10 mm and a width of 30 mm, from a vertical direction orthogonal to the extension direction of the steel fibers at a minimum load of -0.2 kN, a maximum load of -4 kN, and at an ambient temperature of 70°C. For each test piece, the lengths of cracks occurring in the steel fibers after 2 × 10⁶ cycles of the aforementioned load were compared as an index, as illustrated in Table 1 below. The first test piece was a test piece in which nothing was disposed along the steel fibers ("Test piece X1" in Table 1 below). The second test piece was a test piece in which organic fibers were disposed along the steel fibers ("Test piece X2" in Table 1 below). The organic fibers used were nylon 6, with a mass of 470 dtex/1, and a number of embedded fibers equivalent to 78 fibers/5 cm. The third test piece was a test piece in which a brass non-woven fabric was disposed along the steel fibers ("Test piece X3" in Table 1 below). The brass used was C2680, the filament diameter of the non-woven fabric was 25 µm, and the density was 300 g/m².

**[Table 1]**

| | Reinforcement | Crack length (index) |
|---|---|---|
| Test piece X1 | none | 1.0 |
| Test piece X2 | organic fibers (nylon 6, 470 dtex/1, 78 fibers/5 cm) | 0.8 |
| Test piece X3 | brass non-woven fabric | 0.4 |

The pneumatic tire according to the present invention is not limited to the specific configurations described in the above embodiments. Various modifications and changes may be made without departing from the scope of the claims.

### INDUSTRIAL APPLICABILITY

The present invention relates to a pneumatic tire.

### REFERENCE SIGNS LIST

- 1: Pneumatic tire
- 1a: Tread portion
- 1b: Sidewall portion
- 1c: Bead portion
- 2: Applicable rim
- 2a: Rim seat portion
- 2b: Rim flange portion
- 2b1: Outer edge of rim flange portion
- 3: Bead core
- 3a: Inner edge of bead core
- 3b: Outer edge of bead core
- 4: Carcass ply
- 4a: Main body
- 4b: Turn-up portion
- 4b1: Outer edge of turn-up portion
- 5: Cover rubber
- 6 to 9: Belt ply
- 10: Tread rubber
- 11: Side rubber (cover rubber)
- 12: Inner liner
- 21, 121: Reinforcement layer
- 21a: Reinforcement main body
- 21a1: Outer edge of reinforcement layer
- 21b: Reinforcement turn-up portion
- 22: Metal fiber
- 41, 42: Wire rod
- 43: Coating film
- A: Tire width direction
- B: Tire radial direction
- C: Tire circumferential direction
- D: Cord extension direction
- CL: Tire equatorial plane
- L: Overlap region
- P1: Position of inner edge of bead core in tire radial direction
- P2: Position of outer edge of bead core in tire radial direction
- RA: Region from 5% to 30% of tire section height from inner edge of bead core outward in tire radial direction
- SH: Tire section height
- TE: Tread edge

## Claims

1. A pneumatic tire (1) comprising:
a pair of bead cores (3);
a carcass ply (4) comprising a main body (4a) positioned between the bead cores and a turn-up portion (4b) connected to the main body and formed by turning up around each bead core from inside to outside in a tire width direction (A);
a cover rubber (5) covering the main body of the carcass ply and an outer side of the turn-up portion in the tire width direction and configuring a tire outer surface; and
a reinforcement layer (21, 121) located inward from the tire outer surface of the cover rubber and covering an outer side, in the tire width direction, of at least a portion of the turn-up portion of the carcass ply, wherein
the reinforcement layer is configured by a non-woven fabric formed from metal fibers (22);
wherein in a tire widthwise cross-sectional view, at least a portion of the reinforcement layer is located in a region (RA), in a tire radial direction, that is from 5% to 30% of a tire section height from an inner edge of the bead core in the tire radial direction outward in the tire radial direction;
wherein in the tire widthwise cross-sectional view, the reinforcement layer extends from a position farther outward, in the tire radial direction, than an outer edge of the bead core in the tire radial direction to a position farther inward; and
wherein in the tire widthwise cross-sectional view, the reinforcement layer is turned up around the bead core from an outer side towards an inner side in the tire width direction.

2. The pneumatic tire (1) according to claim 1, wherein the metal fibers (22) comprise steel, copper, aluminum, nickel, or an alloy including any of these.

3. The pneumatic tire (1) according to claim 2, wherein the metal fibers (22) comprise brass.

4. The pneumatic tire (1) according to any preceding claim, wherein a surface of the metal fibers (22) is configured by a coating film (43) comprising a binary alloy of copper and zinc or a ternary alloy of copper, zinc, and cobalt.

5. The pneumatic tire (1) according to any preceding claim, wherein a density of the non-woven fabric is from 100 g/m² to 900 g/m².

6. The pneumatic tire (1) according to any preceding claim, wherein a filament diameter of the non-woven fabric is from 10 µm to 75 µm.

7. The pneumatic tire (1) according to any preceding claim, wherein in a tire widthwise cross-sectional view, the reinforcement layer (22) and the turn-up portion (4b) of the carcass ply (4) overlap by 10 mm or more along a ply extension direction orthogonal to a ply thickness direction.

8. The pneumatic tire (1) according to any preceding claim, wherein the reinforcement layer (121) is U-shaped and covers an outer edge (4b1) of the turn-up portion (4b) from an outer side in the tire radial direction (B) and an inner side in the tire width direction (A).

9. The pneumatic tire (1) according to any preceding claim, wherein a modulus of the reinforcement layer (21), in a cord extension direction (D) of ply cords of the turn-up portion (4b), is lower than a modulus of the turn-up portion (4b) in the cord extension direction (D).

## Patentansprüche

1. Luftreifen (1), umfassend:
ein Paar Wulstkerne (3);
eine Karkassenlage (4), umfassend einen Hauptkörper (4a), der zwischen den Wulstkernen angeordnet ist, und einen Umschlagabschnitt (4b), der mit dem Hauptkörper verbunden ist und durch Umschlagen um jeden Wulstkern von innen nach außen in einer Reifenbreitenrichtung (A) gebildet ist;
ein Abdeckgummi (5), der den Hauptkörper der Karkassenlage und eine Außenseite des Umschlagabschnitts in der Reifenbreitenrichtung bedeckt und eine Reifenaußenfläche konfiguriert; und
eine Verstärkungsschicht (21, 121), die sich von der Reifenaußenfläche des Abdeckgummis nach innen befindet und eine Außenseite in der Reifenbreitenrichtung von mindestens einem Abschnitt des Umschlagabschnitts der Karkassenlage bedeckt, wobei
die Verstärkungsschicht durch einen Vliesstoff konfiguriert ist, der aus Metallfasern (22) gebildet ist;
wobei sich in einer Querschnittsansicht des Reifens in Breitenrichtung mindestens ein Abschnitt der Verstärkungsschicht in einem Bereich (RA) in einer radialen Reifenrichtung befindet, der 5 % bis 30 % einer Reifenquerschnittshöhe von einer Innenkante des Wulstkerns in der radialen Reifenrichtung nach außen in der radialen Reifenrichtung beträgt;
wobei sich in der Querschnittsansicht des Reifens in Breitenrichtung die Verstärkungsschicht von einer Position, die weiter außen in der radialen Reifenrichtung liegt als eine Außenkante des Wulstkerns in der radialen Reifenrichtung, zu einer Position erstreckt, die weiter innen liegt; und
wobei in der Querschnittsansicht des Reifens in Breitenrichtung die Verstärkungsschicht um den Wulstkern herum von einer Außenseite zu einer Innenseite in der Breitenrichtung des Reifens umgeschlagen ist.

2. Luftreifen (1) nach Anspruch 1, wobei die Metallfasern (22) Stahl, Kupfer, Aluminium, Nickel oder eine Legierung, die eines dieser Elemente einschließt, umfassen.

3. Luftreifen (1) nach Anspruch 2, wobei die Metallfasern (22) Messing umfassen.

4. Luftreifen (1) nach einem der vorstehenden Ansprüche, wobei eine Oberfläche der Metallfasern (22) durch einen Beschichtungsfilm (43) konfiguriert ist, der eine binäre Legierung aus Kupfer und Zink oder eine ternäre Legierung aus Kupfer, Zink und Kobalt umfasst.

5. Luftreifen (1) nach einem der vorstehenden Ansprüche, wobei eine Dichte des Vliesstoffs 100 g/m² bis 900 g/m² beträgt.

6. Luftreifen (1) nach einem der vorstehenden Ansprüche, wobei ein Filamentdurchmesser des Vliesstoffs 10 µm bis 75 µm beträgt.

7. Luftreifen (1) nach einem der vorstehenden Ansprüche, wobei in einer Querschnittsansicht eines Reifens in Breitenrichtung die Verstärkungsschicht (22) und der Umschlagabschnitt (4b) der Karkassenlage (4) sich um 10 mm oder mehr entlang einer Lagenausdehnungsrichtung orthogonal zu einer Lagendickenrichtung überlappen.

8. Luftreifen (1) nach einem der vorstehenden Ansprüche, wobei die Verstärkungsschicht (121) U-förmig ist und eine Außenkante (4b1) des Umschlagabschnitts (4b) von einer Außenseite in der radialen Reifenrichtung (B) und einer Innenseite in der Reifenbreitenrichtung (A) bedeckt.

9. Luftreifen (1) nach einem der vorstehenden Ansprüche, wobei ein Modul der Verstärkungsschicht (21) in einer Kordausdehnungsrichtung (D) von Lagenkorden des Umschlagabschnitts (4b) niedriger ist als ein Modul des Umschlagabschnitts (4b) in der Kordausdehnungsrichtung (D).

## Revendications

1. Bandage pneumatique (1), comprenant :
une paire de tringles (3) ;
une nappe de carcasse (4) comprenant un corps principal (4a) positionné entre les tringles et une partie retournée (4b) connectée au corps principal et formée en la retournant autour de chaque tringle, de l'intérieur vers l'extérieur, dans une direction de la largeur du pneumatique (A) ;
une gomme de couverture (5) recouvrant le corps principal de la nappe de carcasse et un côté externe de la partie retournée, dans la direction de la largeur du pneumatique, et configurant une surface externe du pneumatique ; et
une couche de renforcement (21, 121) qui se situe vers l'intérieur par rapport à la surface externe du pneumatique de la gomme de couverture et recouvre un côté externe, dans la direction de la largeur du pneumatique, d'au moins une partie de la partie retournée de la nappe de carcasse, dans lequel :
la couche de renforcement est configurée par un tissu non tissé formé à partir de fibres métalliques (22) ;
dans lequel, dans une vue en section transversale dans le sens de la largeur du pneumatique, au moins une partie de la couche de renforcement est disposée dans une région (RA), dans une direction radiale du pneumatique, représentant 5 % à 30 % d'une hauteur de section du pneumatique, d'un bord interne de la tringle, dans la direction radiale du pneumatique, vers l'extérieur, dans la direction radiale du pneumatique ;
dans lequel, dans la vue en section transversale dans le sens de la largeur du pneumatique, la couche de renforcement s'étend à partir d'une position située davantage vers l'extérieur, dans la direction radiale du pneumatique, qu'un bord externe de la tringle, dans la direction radiale du pneumatique, vers une position située davantage vers l'intérieur ; et
dans lequel, dans la vue en section transversale dans le sens de la largeur du pneumatique, la couche de renforcement est retournée autour de la tringle, d'un côté externe vers un côté interne, dans la direction de la largeur du pneumatique.

2. Bandage pneumatique (1) selon la revendication 1, dans lequel les fibres métalliques (22) comprennent de l'acier, du cuivre, de l'aluminium, du nickel ou un alliage incluant un quelconque de ceux-ci.

3. Bandage pneumatique (1) selon la revendication 2, dans lequel les fibres métalliques (22) comprennent du laiton.

4. Bandage pneumatique (1) selon l'une quelconque des revendications précédentes, dans lequel une surface des fibres métalliques (22) est configurée par un film de revêtement (43) comprenant un alliage binaire de cuivre et de zinc, ou un alliage ternaire de cuivre, de zinc et de cobalt.

5. Bandage pneumatique (1) selon l'une quelconque des revendications précédentes, dans lequel une densité du tissu non tissé est comprise entre 100 g/m² et 900 g/m².

6. Bandage pneumatique (1) selon l'une quelconque des revendications précédentes, dans lequel un diamètre de filament du tissu non tissé est compris entre 10 µm et 75 µm.

7. Bandage pneumatique (1) selon l'une quelconque des revendications précédentes, dans lequel, dans une vue en section transversale dans le sens de la largeur du pneumatique, la couche de renforcement (22) et la partie retournée (4b) de la nappe de carcasse (4) se chevauchent sur 10 mm ou plus le long d'une direction d'extension de la nappe orthogonale à une direction de l'épaisseur de la nappe.

8. Bandage pneumatique (1) selon l'une quelconque des revendications précédentes, dans lequel la couche de renforcement (121) a une forme en U et recouvre un bord externe (4b1) de la partie retournée (4b) à partir d'un côté externe, dans la direction radiale du pneumatique, (B), et d'un côté interne, dans la direction de la largeur du pneumatique (A).

9. Bandage pneumatique (1) selon l'une quelconque des revendications précédentes, dans lequel un module de la couche de renforcement (21), dans une direction d'extension des câblés (D) de câblés de la nappe de la partie retournée (4b), est inférieur à un module de la partie retournée (4b) dans la direction d'extension des câblés (D).
